# EUROPEAN PATENT APPLICATION

(11) **EP 1 553 767 A2**
(43) Date of publication of application: **13.07.2005**
(21) Application number: 04257696.7
(22) Date of filing: 10.12.2004
(51) Int. Cl.: H04N 5/77

(54) **Image recording and/or reproducing apparatus**

(30) Priority: 12.12.2003 JP 2003414061
(71) Applicant: CANON KABUSHIKI KAISHA, Ohta-ku, Tokyo (JP)
(72) Inventor: Sakimura, Takeo, Ohta-ku Tokyo (JP)
(74) Representative: Legg, Cyrus James Grahame

(57) **Abstract**

An image recording and/or reproducing apparatus includes a recording and/or reproducing circuit that records input image data onto a recording medium and that reproduces the image data from the recording medium, a determining circuit that determines whether or not the data recorded in the recording medium is unreadable by the recording and/or reproducing circuit, and a display unit that displays the existence of unreadable data when the determining circuit determines that unreadable recording format data is recorded in the recording medium.

## Description

### BACKGROUND OF THE INVENTION

### Field of the Invention

The present invention relates to an image recording and/or reproducing apparatus capable of recording and/or reproducing photographed images.

### Description of the Related Art

Unlike film cameras in which images are recorded on film, digital cameras that record digital data of images provide easy image editing and communication, and are used for a wide variety of applications. Digital cameras allow users to immediately view and delete an image of a photographed scene or re-shoot the scene without waiting for the film to be developed.

Generally, images photographed using a digital camera are recorded onto a removable recording medium, such as a memory card (e.g., Compact Flash), in view of portability. A recording medium having images photographed using a digital camera can be removed and carried, thus allowing the photographed images to be browsed on other information devices. This technology is disclosed in, for example, Japanese Patent Laid-Open No. 11-259506.

A removable recording medium, such as a memory card, is capable of recording not only images photographed using a digital camera but also data having other recording formats, such as text data and spreadsheet data, which can also be exchanged with other information devices.

The data recorded onto a recording medium by a user is not limited to image recording format data. A recording medium having recording format data unreadable by a digital camera may be inserted into the digital camera.

The recording format data that is not supported by the digital camera, such as text data and spreadsheet data, is ignored as a region of recording format data that is not readable as an image.

The user is inconvenienced if the unreadable data recorded in the recording medium is not recognized by the digital camera. Since a recording area of the memory card is occupied by the data that cannot be recognized by the digital camera, an amount of image data corresponding to the originally prescribed recording capacity cannot be recorded. For example, a user who brings a 2-MB removable recording medium for photographing at a remote place can record only 1 MB of image data onto the recording medium if this recording medium already stores 1 MB of non-image data.

If the data stored in this recording medium is image data that can be reproduced by a digital camera, the user knows about the existence of the previously photographed images, and deletes the stored image data, after checking the image data, to allocate the desired area for new photographed image data. If the stored data is non-image data, however, the user does not recognize the data type or even the existence of the data.

A user who desires to record 2 MB of photographed image data is annoyed about the unexpectedly small data recording capacity, i.e., only 1 MB of photographed image data. As a result, the user presumably knows of the existence of non-image data. However, there are other possibilities for such a small capacity of recordable photographed image data, and the user cannot clearly determine the reason for the small capacity of recordable image data.

Another problem is that data that is not readable as an image cannot be recognized by digital cameras and therefore can unintentionally be deleted when a recording medium having the unreadable data is formatted.

The publication noted above describes a system for notifying a user of data corruption, frame mismatching, or data beyond the displayable size during reproducing mode on a digital camera, but does not deal with camera-unrecognizable format data.

### SUMMARY OF THE INVENTION

It is an object of the present invention to provide an image recording and/or reproducing apparatus (Digital Camera, Digital Camcorder, Digital TV, DVD(Digital Versatile Disc) reproducing Device and so on) that allows a user to recognize the existence of unreadable data, including non-image data, recorded in a recording medium and detailed information of the unreadable data.

It is another object of the present invention to provide an image recording and/or reproducing apparatus that allows a user to recognize the existence of unreadable data and detailed information of the unreadable data and that allows the user to select whether or not the unreadable data is to be deleted.

One of the foregoing objects is achieved by an aspect of the present invention through the provision of an image recording apparatus including a recording and/or reproducing unit that records input image data onto a recording medium and that reproduces the image data from the recording medium, a determining unit that determines whether or not the data recorded in the recording medium is readable by the recording and/or reproducing unit, and a notifying unit that notifies the existence of unreadable data in case that the determining unit determines that the recorded data has an unreadable recording format.

According to the present invention, in the image recording and/or reproducing apparatus, the notifying unit notifies confirmation information indicating whether or not the unreadable data is to be deleted by a deleting unit.

According to the present invention, therefore, in an image recording and/or reproducing apparatus capable of recording and/or reproducing an image, if unreadable recording format data is recorded in a recording medium, the user can recognize the unreadable data and can determine the reason for a small number of shots recordable in the recording medium. The user is also prevented from unintentionally deleting important non-image recording format data, which is recorded by other information devices.

In a photographing mode, the user can know of the existence of unreadable data in a recording medium to adjust the number of recordable shots. For example, in case that the number of shots recordable onto a recording medium is zero, the user can recognize unreadable recording format data in the recording medium, and can adjust the number of recordable shots.

Moreover, the user can know of the existence of unreadable recording format data in a recording medium in case that the recording medium is inserted into the image recording and/or reproducing apparatus, and can adjust the number of recordable shots.

Moreover, the user can know of the existence of unreadable recording format data in a recording medium in case that formatting the recording medium, and can adjust the number of recordable shots.

For example, when all data recorded in the recording medium is deleted, the user can know of the existence of unreadable recording format data in a recording medium, and can adjust the number of recordable shots. The user can recognize the file name of unreadable recording format data in a recording medium, thus allowing the unreadable data to be selected and deleted file-by-file to increase the number of recordable shots.

The user can also recognize the total data amount of unreadable recording format data in a recording medium. Therefore, the user can recognize the remaining image capacity, and can adjust the number of recordable shots. The user can also recognize the number of presumably recordable shots corresponding to a total data amount of unreadable recording format data in a recording medium, and can adjust the number of recordable shots.

In an image recording and/or reproducing apparatus capable of recording and/or reproducing an image, if unreadable recording format data is recorded in a recording medium, the user can determine whether or not the unreadable data is to be deleted to ensure a desired number of recordable shots.

A user who operates a digital camera is notified of the existence of unreadable data in a recording medium and of detailed information of the unreadable data, and can therefore determine the reason for a small remaining data capacity of the recording medium. A deletion notifying unit allows the user to determine whether or not the unreadable data is to be deleted to increase the remaining data capacity.

According to the present invention, therefore, when unreadable recording format data is recorded in a recording medium, a user can know of the existence of the unreadable recording format data in the recording medium, and can determine the reason for a recordable data capacity smaller than the expected capacity. The user is also prevented from unintentionally deleting non-image recording format, which is recorded by other information devices.

Further objects, features and advantages of the present invention will become apparent from the following description of the preferred embodiments with reference to the attached drawings.

### BRIEF DESCRIPTION OF THE DRAWINGS

Fig. 1 is a block diagram of an image recording apparatus according to a first embodiment of the present invention.

Fig. 2 is a rear view of a digital camera according to the first embodiment of the present invention.

Fig. 3 is flowchart showing the operation of the image recording apparatus according to the first embodiment of the present invention.

Figs. 4A and 4B are rear views of a digital camera according to a second embodiment of the present invention.

Fig. 5 is a flowchart showing the operation of an image recording apparatus according to the second embodiment of the present invention.

### DESCRIPTION OF THE PREFERRED EMBODIMENTS

Embodiments of the present invention will now be described.

### First Embodiment

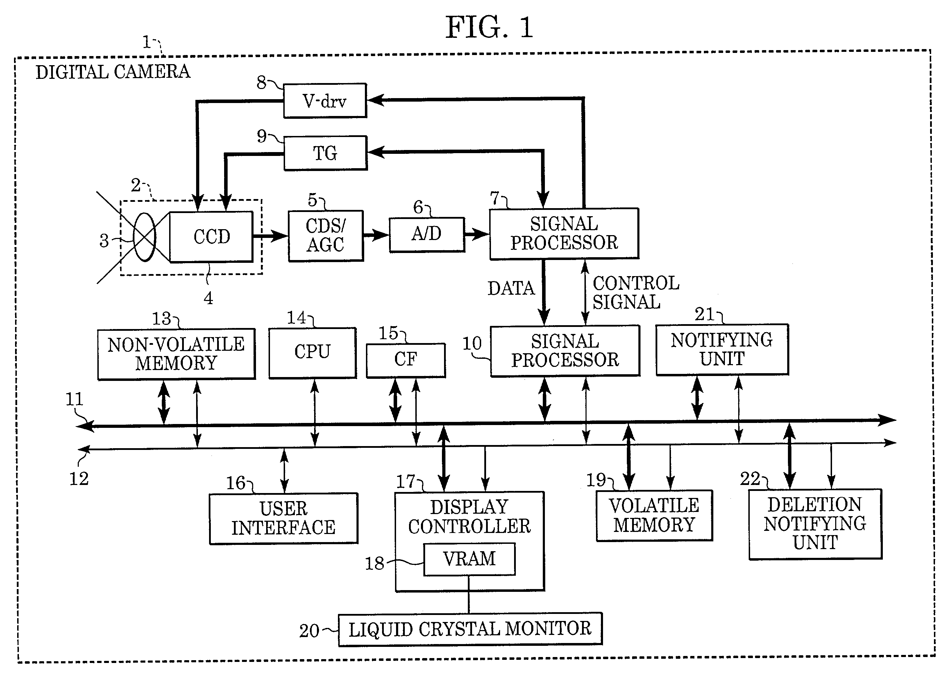

An image recording apparatus according to a first embodiment of the present invention will be described with reference to Figs. 1 to 3.

In the first embodiment, if unreadable data is stored in a recording medium, a view indicating the data size of the unreadable data and a selection view indicating whether or not the unreadable data is to be deleted are shown on a monitor attached to a digital camera in a photographing mode of the digital camera.

Fig. 1 shows the system configuration of a digital camera 1 according to the first embodiment. The digital camera 1 includes a photographing optical system 2 including a lens 3 and an imaging device 4, e.g., a charge-coupled device (CCD). The digital camera 1 further includes a correlated double sampling (CDS)/ automatic gain control (AGC) 5, an analog-to-digital (A/D) converter 6, a signal processor 7, a V-drive 8 for driving the CCD 4, a timing generator (TG) 9, a signal processor 10, a data bus 11, a central processing unit (CPU) bus 12, a non-volatile memory 13, such as a read-only memory (ROM), and a CPU 14. A memory card 15 records image data, such as Compact Flash (registered trademark) (CF). The digital camera 1 further includes a user interface 16 having an operating unit, a display controller 17 including a video random access memory (VRAM) 18, a volatile memory 19, such as a dynamic RAM (DRAM), and a liquid crystal monitor 20.

The photographing and displaying operation of the digital camera 1 will now be described. This operation is performed by implementing on the CPU 14 software (a control program) having an algorithm loaded from the memory card 15 or the non-volatile memory 13 onto a program memory of the volatile memory 19.

An image focused onto the CCD 4 by the lens 3 of the photographing optical system 2 is supplied to the CDS/AGC 5 to adjust the amplitude and gain of the electrical signal. Then, the A/D converter 6 performs analog-to-digital conversion, and the resulting digital signal is transformed into a color coordinate value of the image by the signal processor 7. The color coordinate value may be, but is not limited to, a Y-C coordinate value or a RGB coordinate value.

The signal processor 7 outputs data corresponding to the number of photographed pixels of the CCD 4 in synchronization with a pixel clock. In Fig. 1, the signal processor 7 outputs a pixel clock on a control line, and actual image data obtained from the photographing optical system 2 on a data line. The signal processor 7 also outputs on the control line a control signal corresponding to the size of the photographed area of the CCD 4. Specifically, the signal processor 7 outputs a horizontal sync signal HD each time one line in the photographed area begins, and a vertical sync signal VD every other field of the photographed area.

The signal obtained by performing color transformation on the image photographed with the photographing optical system 2 is output in synchronization with the control signal generated by the signal processor 7, and is then input to the signal processor 10. The signal processor 10 controls data reading from and writing to the volatile memory 19, data reading from and writing to the memory card 15, driving of the display controller 17, writing of image display data of the liquid crystal monitor 20 to the VRAM 18, conversion of the signal from the CPU 14, transmission of the control signal to the photographing optical system 2, and transmission of image data to the outside of the digital camera 1. The image data generated by the signal processor 10 is compressed according to JPEG image format to generate recording data, which is then written and recorded to the memory card 15.

In order to display an image on the liquid crystal monitor 20 for preview during photographing or during reproducing operation, image data is written to the VRAM 18 via the data bus 11, and the display controller 17 is driven via the CPU bus 12. The display controller 17 causes the data of the VRAM 18 to be displayed on the liquid crystal monitor 20.

Via the user interface 16, the photographing or reproducing mode is set from the user, the liquid crystal monitor 20 is turned on or off, and the memory card 15 is inserted or removed.

Accordingly, the user photographs, records, and reproduces an image.

In the first embodiment, the digital camera 1 further includes a notifying unit 21 and a deletion notifying unit 22. The operation of the notifying unit 21 and the deletion notifying unit 22, and the operation of the digital camera 1 when the mode is changed to the photographing mode will now be described.

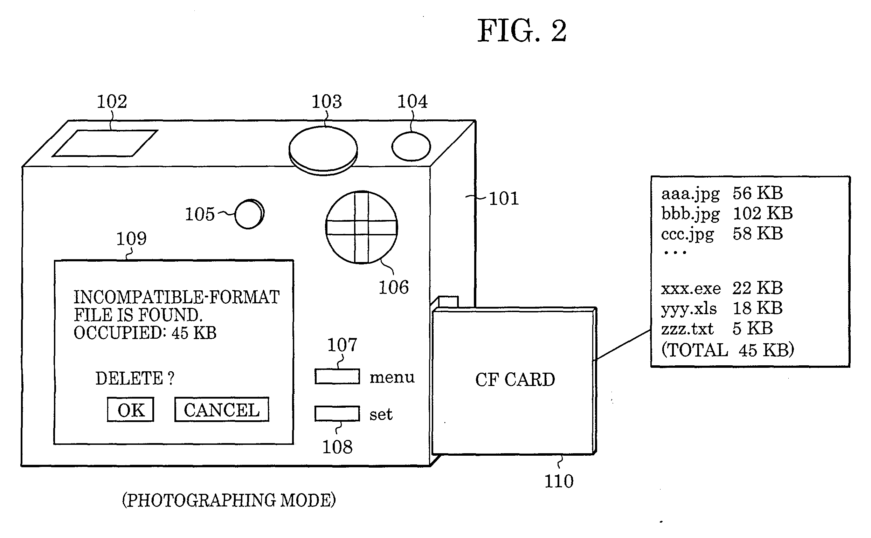

Fig. 2 is a rear view of a digital camera 101 in the photographing mode. The digital camera 101 includes a mode display screen 102, a mode dial 103, a shutter button 104, an optical finder 105, a scroll button 106, a menu button 107, a set button 108, and a liquid crystal monitor 109. All data is input using the operating units shown in Fig. 2 via the user interface 16 shown in Fig. 1. The mode dial 103 is used to determine an operation mode of the digital camera 101. Operation modes include photographing modes, e.g., auto, manual, AV-priority, TV-priority, portrait, sports, night scene, and stitch, a reproducing mode, and a power on/off mode.

A memory card 110, e.g., a CF card, is inserted into the digital camera 101. The data recorded in the memory card 110 is not accessible until the memory card 110 is inserted in the digital camera 101 and the digital camera 101 is powered on. The operation described below is performed on the presumption that the memory card 110 has been inserted in the digital camera 101. The memory card 110 includes a plurality of image recording format files, e.g., JPEG files with the file extension jpg, that is, "aaa.jpg", "bbb.jpg", "ccc.jpg", etc. The memory card 110 also includes other non-image files, e.g., a 22-KB executable file "xxx.exe", an 18-KB spreadsheet file "yyy.xls", a 5-KB text file "zzz.txt", etc. The non-image files were recorded in the memory card 110 when the memory card 110 was inserted in other information devices such as a personal computer (PC). The non-image data can be recognized by a standard file system incorporated in the digital camera 101; however, the non-image data is not displayed in the reproducing mode or is not regarded as an image area because the digital camera 101 does not have a display supporting tool, e.g., a spreadsheet tool or an editing tool.

Thus, the user cannot know of the existence of the "xxx.exe", "yyy.xls", and "zzz.txt" files or cannot recognize the file type of the "xxx.exe", "yyy.xls", and "zzz.txt" files on the digital camera 101. When photographing an image, the digital camera 101 determines the number of presumed remaining shots based on the amount of remaining capacity of the recording medium 110, and displays the number of presumed shots on the mode display screen 102, which is the amount of non-image data smaller than the number of a prescribed shots.

Even though the user inserts the memory card 110 having a predetermined capacity and desires to photograph a number of shots corresponding to the capacity, the user can photograph only a smaller number of shots than the expected number of shots. Moreover, the user does not clearly know the reason for the unexpectedly fewer shots to be recordable.

If a user who does not know of the existence of the non-image data formats the recording medium 110, even important data can unintentionally be deleted.

This problem can be overcome by the operation of the notifying unit 21 and the deletion notifying unit 22 shown in Fig. 1 of the first embodiment, described below. This operation is performed by implementing on the CPU 14 software (a control program) having an algorithm loaded from the memory card 15 or the non-volatile memory 13 onto a program memory of the volatile memory 19.

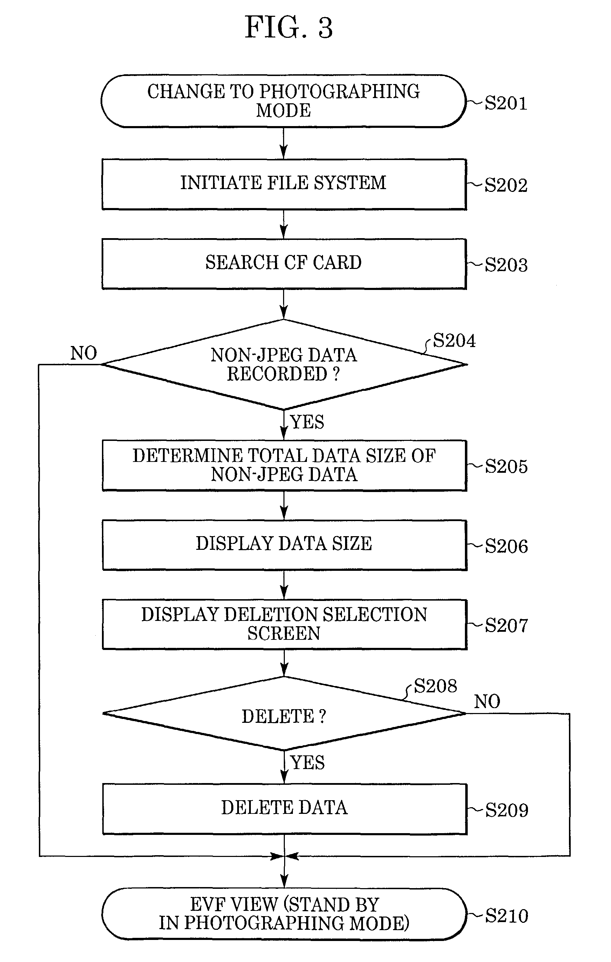

Fig. 3 is a flowchart showing the procedure in the first embodiment.

When the mode of the digital camera 101 is changed to the photographing mode (step S201), a file system incorporated in the digital camera 101 is initiated (step S202). The file system searches the memory card 110 (step S203) for non-JPEG data (step S204). JPEG data can be read by the digital camera 101, and can be displayed as an image on the liquid crystal monitor 109 in the reproducing mode.

However, non-JPEG data cannot be displayed.

Standard image formats for use in digital cameras will now be described.

The standard formats for use in digital cameras include DCF, exif, etc.

The exif format relates to file handling, and specifies the location in a removable memory in and from which a file is recorded and reproduced. The exif format facilitates exchange of image files among various cameras and direct input of image files from cameras to printers.

Attribute information for image formats, such as JPEG and TIFF formats, is added together with image information. The attribute information includes ID auxiliary information having the following tag information and thumbnail images:
(1) version tag indicating exif version information;
(2) image data characteristics tag indicating color space information such as Y, Cb, and Cr, or R, G, and B;
(3) structure tag indicating the compressed bits per pixel, the image size (e.g., the pixel x dimension, the pixel y dimension, etc.), the archiving mode (compressed or uncompressed), the number of pixels, or the like;
(4) user tag indicating vender note, user comment, or the like;
(5) related-file tag indicating a related audio file, or the like;
(6) date and time tag indicating the image data creation date and time, the digital data creation date and time, or the like; and
(7) photographic conditions tag indicating the exposure time, the F number, the sensitivity, the shutter speed, the aperture value, the focal length, the photographic conditions such as flash, the distance measurement system, the photometric system, or other photographic parameter information.

In Fig. 2, the "aaa.jpg", "bbb.jpg", "ccc.jpg", etc., files recorded in the CF card 110 are JPEG data, and can therefore be read and displayed, whereas, the "xxx.exe", "yyy.xls", and "zzz.txt" files are non-JPEG data, and therefore cannot be read or displayed. The notifying unit 21 obtains the data size of the individual non-JPEG data and determines the total data size of the non-JPEG data (step S205). If non-JPEG data is not recorded in the CF card 110, the digital camera 101 stands by in the photographing mode, and EVF (electric viewfinder) display is provided on the liquid crystal monitor 109 (step S210).

For example, the "xxx.exe", "yyy.xls", and "zzz.txt" files have 22 KB, 18 KB, and 5 KB, respectively, and a total data size of 45 KB is determined (step S205). The notifying unit 21 displays this total data size on the liquid crystal 109 (step S206). Thus, the user knows of the existence of unreadable recording format data in the memory card 110.

The deletion notifying unit 22 is activated to display on the liquid crystal monitor 109 a selection screen indicating whether or not the non-JPEG data is to be deleted (step S207). Thus, the user can delete the unreadable recording format data to increase the number of recordable shots. Also, the user can continue photographing while keeping important unreadable recording format data. If the user selects deletion of the data in step S208, the data is deleted using the file system (step S209). If the user does not select deletion in step S208, the digital camera 101 stands by in the photographing mode, and EVF display is provided on the liquid crystal monitor 109 (step S210).

Therefore, the digital camera 101 allows the user to recognize the existence of unreadable recording format data and the total data size of the unreadable data, and also allows the user to determine whether or not the unreadable data is to be deleted. If the unreadable data is not necessary, the user is able to delete the unnecessary data to increase the number of recordable shots.

In the first embodiment, JPEG is only a readable image recording format. However, this is merely an example, and TIFF (tagged image file format) for use in thumbnail images and other image recording formats (e.g., GIF (graphic interchange format), BMP (bitmap), etc.,) may also be used as readable image recording formats.

### Second Embodiment

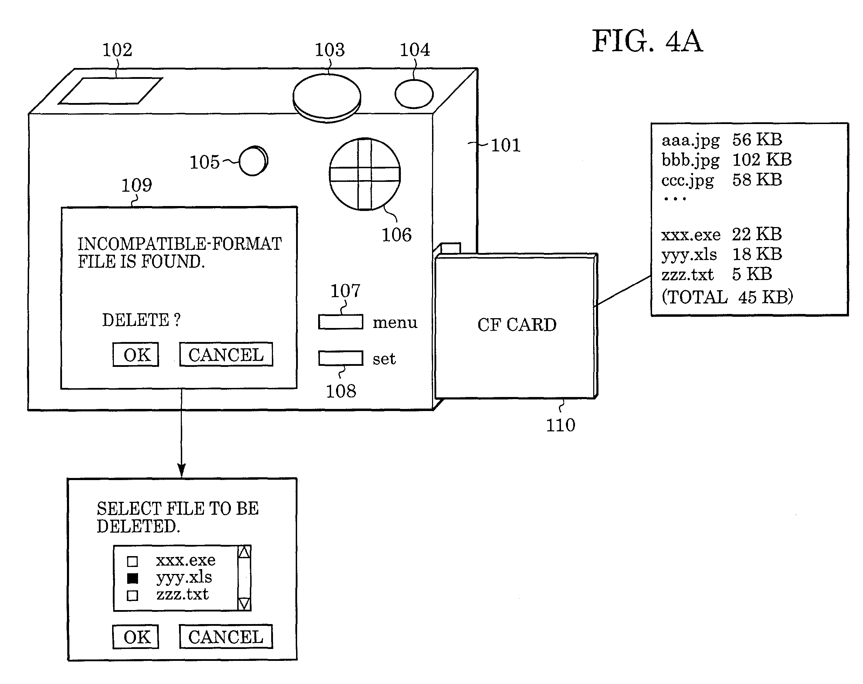

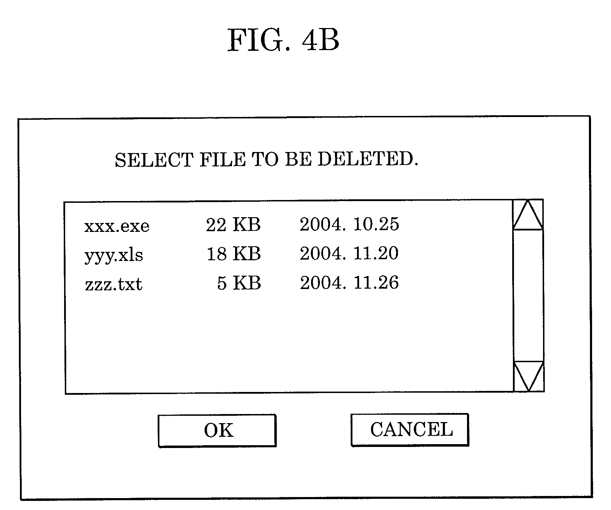

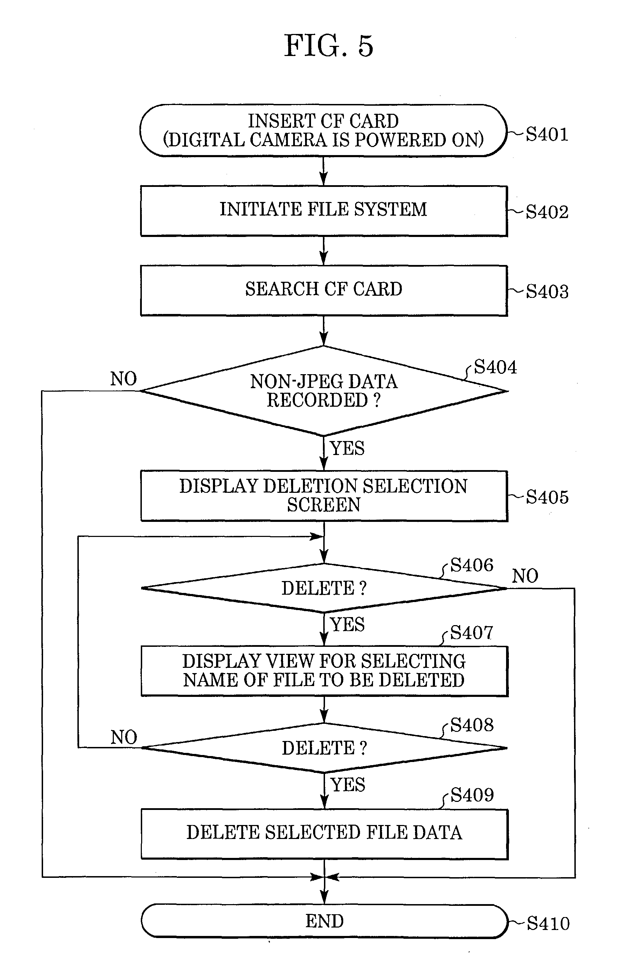

An image recording apparatus according to a second embodiment of the present invention will be described with reference to Figs. 4 and 5. In the second embodiment, when a recording medium, such as a memory card, is inserted into a digital camera, a view indicating file names of unreadable data in the recording medium and a selection view indicating whether or not the unreadable data is to be deleted are shown on a monitor attached to the digital camera. In the following description, it is presumed that the digital data has been powered on.

The structure and operation of the digital camera of the second embodiment are substantially the same as those of the digital camera of the first embodiment shown in Fig. 1, except for the operation of the notifying unit 21 and the deletion notifying unit 22.

Fig. 4A is a rear view of a digital camera 101 in which a memory card 110 is inserted. In Fig. 4A, the same parts as those shown in Fig. 2 are given the same reference numerals. The difference from the first embodiment is a screen displayed on the liquid crystal monitor 109.

As shown in Fig. 4B, the files stored in the CF card 110 may be shown on the screen together with the file names, the data capacity of these files, and the creation date and time. This helps the user understand the details of the files stored in the CF card 110.

Fig. 5 is a flowchart showing the procedure in the second embodiment. The procedure will now be described in detail.

When the memory card 110 is inserted in the digital camera 101 that has been powered on (step S401), a file system incorporated in the digital camera 101 is initiated (step S402). The file system searches the memory card 110 (step S403) for non-JPEG data (step S404). JPEG data can be read by the digital camera 101, and can be displayed as an image on the liquid crystal monitor 109 in the reproducing mode. Non-JPEG data cannot be displayed. In Fig. 4A, the "aaa.jpg", "bbb.jpg", "ccc.jpg", etc., files recorded in the CF card 110 are JPEG data, and can therefore be read and displayed, whereas, the "xxx.exe", "yyy.xls", and "zzz.txt" files are non-JPEG data, and therefore cannot be read or displayed. The notifying unit 21 first notifies the user of the existence of non-JPEG data in the manner shown in Fig. 4A on the liquid crystal monitor 109. Then, the deletion notifying unit 22 is activated to display a selection screen indicating whether or not the non-JPEG data is to be deleted on the liquid crystal monitor 109 (step S405). Thus, the user is able to know of the existence of unreadable recording format data in the memory card 110. If non-JPEG data is not recorded, the procedure ends (step S410).

The user is able to delete the unreadable recording format data to increase the number of recordable shots. The user is also able to continue photographing while keeping important unreadable recording format data. If the user selects deletion of the data in step S406, the notifying unit 21 displays a view including a list of file names and check boxes for checking and selecting the associated file names to be deleted. The deletion notifying unit 22 displays a view including "OK" and "CANCEL" buttons (step S407). The files are scrolled on the screen by operating the scroll button 106, and each file is highlighted. When the set button 108 is pressed while highlighting a file, the name of this file is selected. In Fig. 4A, the "yyy.xls" file is highlighted and selected. The scroll button 106 is pressed downwards to scroll down to the last file, and is further pressed downwards to move to the "OK" button and then to the "CANCEL" button. In this way, the set button 108 is set by the "OK" or "CANCEL" button while selecting a file (step S408). If "OK", i.e., deletion, is selected, the data associated with the selected file name is deleted using the file system (step S409). If "CANCEL" is selected, i.e., if deletion is not selected, the selection view is again displayed in step S406. If "CANCEL" is also selected in step S406, the procedure ends (step S410).

Therefore, when a recording medium is inserted into the digital camera 101, the user can know of the existence of unreadable recording format data on the digital camera 101. The user can also determine whether or not data is to be deleted while viewing file names on the digital camera 101. The user is able to delete unnecessary data to increase the number of recordable shots.

The illustrated embodiments are merely examples, and the present invention is not limited to these embodiments. The operation in the illustrated embodiments is performed when the mode of the digital camera 101 is changed to the photographing mode or when a recording medium is inserted into the digital camera 101. For example, this operation may be performed when the number of remaining recordable shots is zero in the photographing mode, when deletion of all data recorded in a recording medium is selected, or when a recording medium is formatted. In the illustrated embodiments, the notifying unit 21 notifies the user of the total data size and file names of unreadable data. Other data attribute information, e.g., the number of recordable shots corresponding to the total data size, may be shown. The notifying unit 21 and the deletion notifying unit 22 may be combined.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An image recording and/or reproducing apparatus comprising:
recording and/or reproducing means for recording input image data onto a recording medium and/or reproducing the image data from the recording medium;
determining means for determining whether or not the data recorded in the recording medium is readable by the recording and/or reproducing means; and
notifying means for notifying the existence of unreadable data in case that the determining means determines that the recorded data has an unreadable recording format.

2. The apparatus according to Claim 1, further comprising:
imaging means,
wherein the notifying means shows the existence of unreadable recording format data in the recording medium in case that the image recording and/or reproducing apparatus is in a photographing mode.

3. The apparatus according to Claim 1, wherein the notifying means shows the existence of unreadable recording format data in the recording medium in case that the remaining amount of the recording medium is zero.

4. The apparatus according to Claim 1, wherein the notifying means shows the existence of unreadable recording format data in the recording medium in case that the recording medium is inserted into the image recording and/or reproducing apparatus.

5. The apparatus according to Claim 1, wherein the notifying means shows the existence of unreadable recording format data in the recording medium in case that the recording medium is formatted.

6. The apparatus according to Claim 1, wherein the notifying means shows the existence of unreadable recording format data in the recording medium in case that all data recorded in the recording medium is to be deleted.

7. The apparatus according to Claim 1, wherein the notifying means shows the existence of unreadable recording format data in the recording medium by using a file name of the unreadable recording format data.

8. The apparatus according to Claim 1, wherein the notifying means shows the existence of unreadable recording format data in the recording medium by using a total data amount of the unreadable recording format data.

9. The apparatus according to Claim 1, wherein the notifying means shows the existence of unreadable recording format data in the recording medium by using the number of presumably recordable shots corresponding to a total data amount of the unreadable recording format data.

10. The apparatus according to Claim 1, further comprising;
deleting means for deleting the unreadable data,
wherein the notifying means notifies confirmation information indicating whether or not the unreadable data is to be deleted by the deleting means.

11. A recording medium recording a control program for controlling an image recording and/or reproducing apparatus capable of recording and/or reproducing an image, the control program including the steps of:
determining whether or not unreadable recording format data exists in the recording medium; and
notifying the existence of unreadable recording format data in case that the unreadable recording format data exists.

12. The recording medium according to Claim 11, further comprising a step of;
deleting the unreadable data,
wherein the notifying step notifies confirmation information indicating whether or not the unreadable data is to be deleted by the deleting step.
